# EUROPEAN PATENT SPECIFICATION

(11) **EP 0 364 199 B1**
(45) Date of publication and mention of the grant of the patent: **07.01.1993**
(21) Application number: 89310317.6
(22) Date of filing: 09.10.1989
(51) Int. Cl.: A01K 13/00

(54) **Horse blanket**
Decke für Pferde
Couverture pour chevaux

(30) Priority: 10.10.1988 GB 8823723; 19.05.1989 GB 8911605
(43) Date of publication of application: 18.04.1990
(73) Proprietor: Tribe, Marian, Basingstoke Hants RG27 OAR (GB); Dennis, Jean Margaret, Basingstoke Hants (GB)
(72) Inventor: Tribe, Marian, Basingstoke Hants RG27 OAR (GB); Dennis, Jean Margaret, Basingstoke Hants (GB)
(74) Representative: Lunt, George Francis Mark

(56) References cited:
- EP-A- 0 060 449
- DE-A- 1 928 505
- US-A- 3 340 549
- US-A- 3 541 620

## Description

This invention relates to blankets for quadruped animals and particularly to horse blankets.

Horse blankets are well known and are for keeping horses warm in wintry conditions. They generally comprise a shaped blanket of warm material having a variety of means to keep the blanket on the horse. Some have no such means and rely on the use of a separate girth strap to keep the blanket in place. Others have straps attached which enable the blanket to be kept on the horse' back. Such straps may be disposed as a crossover surcingle so as to reduce the pressure on a horse's back. If ordinary girth straps are used pressure is continuously applied and this often causes discomfort to a horse after a prolonged period of time.

It is known from EP-A-0,060,449 to provide a horse blanket shaped and sized to fit the horse and comprising an undersheet and an oversheet of knitted synthetic fibres which generate therapeutic static electricity, and between them an air permeable synthetic foam lining for additional warmth, all three layers being sewn or welded all around the edges of the blanket. It is also known from DE-A-1,928,505 to provide a quited horse blanket in which an insulating fibre padding is stuffed between a waterproof outer layer and an inner layer of a material that clings to the horse's body, the two layers and the padding being stitched or heat moulded together.

In any event however, there is presently no method of adjusting the warmth of a horse blanket. In particularly cold conditions, when a warmer covering for a horse is required, it has hitherto been the practice simply to place an underblanket underneath the main blanket and fold the under blanket over the main blanket at the horse's withers so as to ensure that the under blanket does not slip out between the horse's back and the main blanket. This is not a very satisfactory solution because it is rather clumsy, the blankets do not stay in place very well and two blankets are used, both of which will be soiled in time.

Horse blankets soon require washing, particularly during inclement weather conditions. Most reasonable horse blankets are made of thick woolly material, and are usually far too big to be washed in a domestic washing machine. Needless to say, two blankets require two washings.

Thus it is an object of the present invention to provide a blanket for a horse or other quadruped animal which does not suffer from, or at least mitigates the effects of, the aforementioned problems.

In accordance with the present invention, a blanket for a quadruped animal is shaped and sized to fit the animal intended to wear the blanket, and comprises an undersheet and an oversheet connected together at their edges and an inner lining between them for warmth, the undersheet and oversheet together forming a cover, wherein said cover comprises a relatively light bag with an opening in it, and the inner lining comprises at least one separate relatively heavy blanket which is insertable into the bag through the opening and is releasably fastenable to the cover at least in the region of the neck and shoulders of the animal so as to locate the inner blanket in the cover.

The present invention solves both the aforementioned disadvantages of presently available horse blankets. Firstly, it is a simple matter to double up the inner blanket or to replace the inner blanket with a warmer one and so that the warmth of the overall blanket is easily adjustable. Secondly, only the cover will generally require washing as only the undersheet comes into contact with the horse and the oversheet is exposed to the weather and to the ground or other objects which the horse might brush against whilst wearing the blanket.

In the case of horse blankets, if the undersheet is made from a light breathable material such as cotton and the oversheet from a substant¡ally showerproof material such as nylon, then the cover will be light enough to be washable in most domestic washing machines. The cover by itself will even provide a useful light blanket for summer use.

Preferably the cover is generally U-shaped with a very broad base to the U and the arms of the U being provided to extend around the neck and shoulders of the animal and be joined at its breast.

The opening in the cover may be disposed along the joint between the undersheet and oversheet on a line around the outside of the base of said U in the region of the horse's rump when the blanket is being worn by a horse.

In this event the cover may be provided with openings at the ends of the arms of said U and through which tabs provided on the ends of the arms of the correspondingly shaped inner blanket can the passed and secured to the cover so as to locate the inner blanket in the cover. Preferably the tabs are of hooped or hooked nylon and patches of correspondingly hooked or hooped nylon are disposed on the undersheet adjacent said openings so that on being threaded through said openings the tabs may be fastened to said patches to securely locate the inner sheet inside the cover.

The inner blanket may be provided with corresponding areas of hooped and hooked nylon so that two or more inner blankets can be fastened together to form a thicker and warmer blanket laminate for insertion in the cover.

A presently preferred alternative arrangement provides the opening in the cover along the joint between the undersheet and oversheet on a line around the inside of the base of said U in the region of the horse's neck and shoulders when the blanket is being worn by a horse.

Preferably this opening is closeable by mutually opposing strips of hooped and hooked nylon disposed on opposite sides of the opening. In this case it is preferred if the correspondingly shaped inner blanket is also provided with strips of hooped and hooked nylon in the same region thereof as the cover, one on each side of the blanket, so that when the inner blanket is inserted into the cover, the hooped nylon on the blanket can be engaged with the hooked nylon on one side of the opening in the cover and the hooked nylon on the blanket can be engaged with the hooped nylon on the other side of the opening in the cover.

This arrangement makes it very easy for more than one inner blanket to be used because two or more can be connected together in this neck region of the blanket by engagement of respective hooped and hooked nylon regions, always leaving on one side of the multiple blanket a region of hooped nylon for engagement with the hooked nylon in the opening of the cover and on the other side a region of hooked nylon.

In this way, the inner blanket, or each of them where there is more than one, is securely held in place in the cover by its or their engagement with the hooped/hooked nylon regions in the opening of the cover. This reduces any tendency for the inner blanket to ruck or otherwise move about inside the coversheet while the blanket is being worn by a horse.

The arms of the cover may be provided with further patches of hooped and hooked nylon by means of which the arms may be secured together at the horse's breast. This method may be supplemented with straps and buckles if desired.

Furthermore, the oversheet may have straps connected thereto, in the American style for instance, whereby the cover may be secured to a horse's back.

The or each inner blanket is preferably a quilt.

The invention is further described hereinafter, by way of example only, with reference to the accompanying drawings, in which:-
Fig 1 is a top plan view of a blanket according to the present invention;
Fig 2 shows a horse wearing a blanket such as that shown in Fig 1;
Fig 3 is an underneath plan view of the blanket of Fig 1;
Fig 4 is a plan view of an inner blanket;
Fig 5a is a perspective view of an alternative embodiment of an inner blanket according to the present invention; and,
Fig 5b is a similar view of a cover for use with the blanket of Fig 5a.

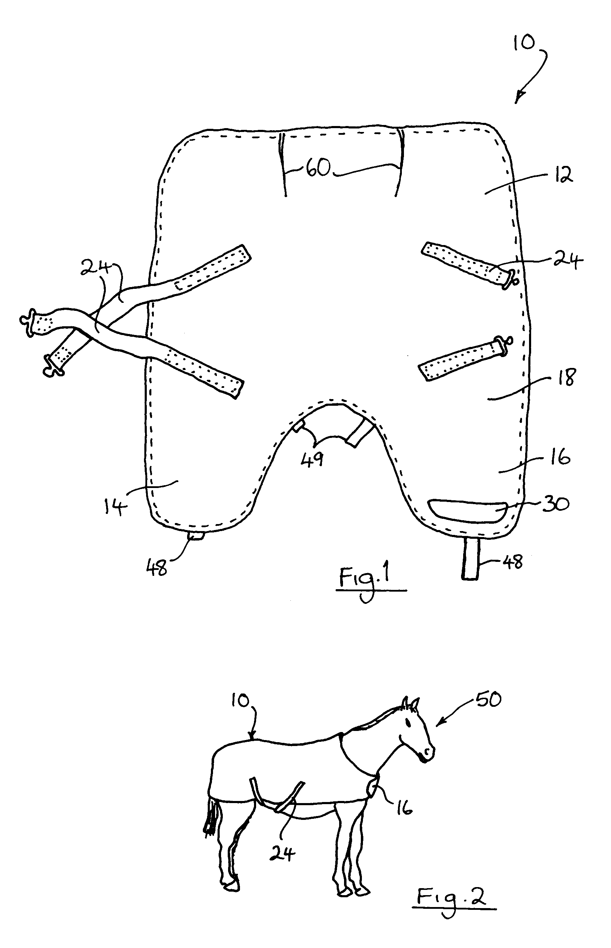

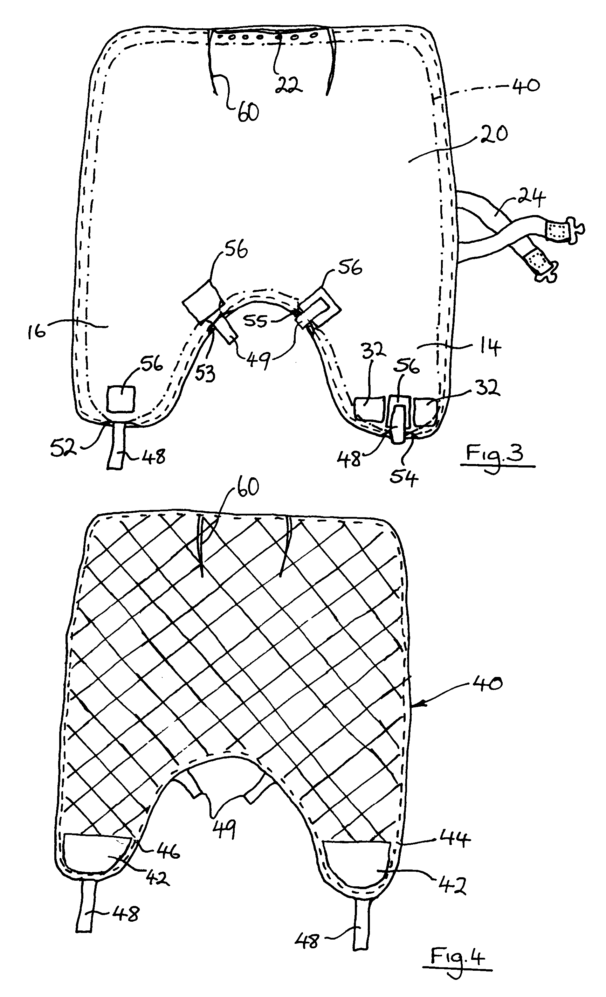

A horse blanket 10 according to the invention is generally U-shaped having an essentially square part 12 forming the base to the U and arms 14,16. The blanket 10 comprises two sheets of material forming a cover, only the top, oversheet 18 being visible in Fig 1, while only the bottom, undersheet 20 is visible in Fig 3. The two sheets 18,20 are sewn together around their peripheries to form a bag. An opening 22 is left at the base of the U which is closeable by poppers 24 or the like or by a zip fastener, for instance.

The top oversheet 18 is of breathable weatherproof, or showerproof, material such as nylon, while the undersheet 20 is made from a comfortable breathable material such as cotton. The oversheet 18 has straps and buckles 24 sewn, or otherwise secured, thereto by means of which the blanket can be secured on the back of a horse 50. The straps 24 are arranged in the American style for maximum comfort for the horse.

The arms 14,16 are provided with complementary patches 30,32 of hooped and hooked nylon, one patch 30 on the oversheet side of arm 16, and the other patch 32 on the undersheet side of arm 14. When placed on a horse's back as in Fig 2, the two arms 14,16 are pressed together with the patches 30,32 against one another so that the patches interengage to keep the arms 14,16 together and to further secure the blanket 10 on the back of the horse 50.

Alternatively, the arms 14,16 may be provided with straps and buckles (not shown) or other means to securely connect the arms together when the blanket is being worn by a horse.

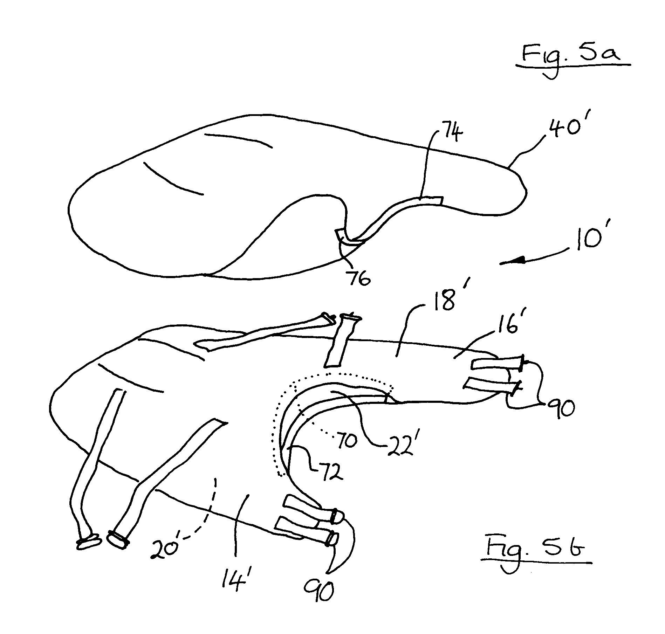

Between the sheets 18,20 inside the bag formed by them, is inserted an inner sheet 40 (see Fig 4) which is of the same general shape as the sheets 18,20 only slightly smaller. This is a quilted cotton sheet provided for warmth and may conveniently be supplied in several thicknesses. Furthermore each inner sheet 40 may have on each side complementary patches 42 of hooped and hooked nylon (only the patches on one side being visible in the drawing). This enables two or more inner sheets to be laid on one another to create an overall inner sheet of any desired thickness.

The inner blanket 40, or a number of them if joined together, are inserted through the opening 22 in the cover 18,20. Arms 44,46 of the inner sheet 40 are provided at their ends with tabs 48 of hooped or hooked nylon. These are passed through holes 52,54 provided for this purpose in the ends of the arms 14,16 in the cover 18,20. Additional tabs 49 can also be provided in the region of the horse's withers for passing through holes 53,55 in this area of the cover 18,20.

Further patches 56 of hooped or hooked nylon are disposed on the undersheet 20 to cooperate with the tabs 48,49 and so as to secure the inner sheet in position in the cover 18,20.

The cover 18,20 and the inner sheets 40 are shaped by tucks 60 so that, once placed on a horse's back, the blanket 10 conforms neatly with the shape of the horse.

A preferred embodiment of the present invention is shown in Figs 5a,b. Here the opening 22′ in the cover 18′,20′ is on the inside of the base of the U in the neck and shoulders region of the blanket 10′ when it is being worn by a horse.

The opening has mutually facing strips 70,72 of hooped and hooked nylon which are adapted to be pressed together in use to close the opening 22′.

The inner blanket 40′ differs from that of Fig 4 in that it has no tabs 48,49 (no corresponding openings 52,54 being provided in the arms 14′,16′ of the cover 18′,20′), nor does it have the patches 42 of hooped/hooked nylon. Instead it is provided with strips 74,76 of hooped and hooked nylon, one on each side thereof, which, after the inner sheet has been inserted through the opening 22′, are adapted to be engaged between the strips 70,72 of hooped/hooked nylon in the opening 22′. This serves the dual function of closing the opening 22′ so that the inner blanket 40′ cannot come out of the cover 18′,20′ and more importantly firmly holds the inner blanket in place. This reduces any tendency which the inner blanket has of moving about inside the cover.

It will of course be apparent that two inner blankets 40′, possibly of different warmth values, can be attached to each other by strips 74 on one and 76 on the other so that the resulting laminate still has mutually opposing strips 74,76 for attachment in the opening 22′.

In this embodiment of the invention the arms 14′16′ of the cover 18′,20′ are provided with straps and buckles 90 to enable them to be connected together at the horse's breast.

The present description is confined to a horse blanket, but of course the same principles could be applied to a blanket for any quadruped animal.

## Claims

1. A blanket (10,10′) for a quadruped animal (50), the blanket being shaped and sized to fit the animal intended to wear the blanket, and comprising an undersheet (20,20′) and an oversheet (18,18′) connected together at their edges and an inner lining between them for warmth, the undersheet and oversheet together forming a cover (18,20,18′,20′) characterised in that said cover comprises a relatively light bag with an opening (22,22′) in it, and the inner lining comprises at least one separate relatively heavy blanket (40,40′) which is insertable into the bag through the opening and is releasably fastenable to the cover at least in the region of the neck and shoulders of the animal so as to locate the inner blanket in cover.

2. A blanket as claimed in claim 1 characterised in that the undersheet (20,20′) is made from a light breathable material such as cotton and the oversheet (18,18′) from a substantially showerproof material such as nylon.

3. A blanket as claimed in claim 1 or 2 characterised in that the cover is generally U-shaped with a very broad base (12) to the U and the arms (14,16) of the U being provided to extend around the neck and shoulders of the animal and be joined at its breast.

4. A blanket as claimed in claim 3 characterised in that the opening (22) in the cover is disposed along the joint between the undersheet and oversheet on a line around the outside of the base of said U in the region of the horse's rump when the blanket is being worn by a horse (50).

5. A blanket as claimed in claim 4 characterised in that the cover has openings (52,54) at the ends of the arms (14,16) of said U and through which tabs (48) provided on the ends of the arms (44,46) of the correspondingly shaped inner blanket (40) can the passed and secured to the cover (18,20) so as to locate the inner blanket (40) in the cover.

6. A blanket as claimed in claim 4 or 5 characterised in that the inner blanket has corresponding areas (42) of hooped and hooked nylon so that two or more inner blankets can be fastened together to form a thicker and warmer blanket laminate for insertion in the cover.

7. A blanket as claimed in claim 3 characterised in that the opening (22′) in the cover (18′20′) is along the joint between the undersheet (20′) and oversheet (18′) on a line around the inside of the base of said U in the region of the horse's withers when the blanket is being worn by a horse (50).

8. A blanket as claimed in claim 7 characterised in that said opening is closeable by mutually opposing strips (70,72) of hooped and hooked nylon disposed on opposite sides of the opening.

9. A blanket as claimed in claim 8 characterised in that the correspondingly shaped inner blanket (40′) is also provided with strips (74,76) of hooped and hooked nylon in the same region thereof as the cover, one on each side of the inner blanket, so that when the inner blanket (40′) is inserted into the cover (18′,20′), the hooped nylon (eg 74) on the inner blanket can be engaged with the hooked nylon (eg 70) on one side of the opening (22′) in the cover and the hooked nylon (eg 76) on the blanket can be engaged with the hooped nylon (eg 72) on the other side of the opening (22′) in the cover.

10. A blanket as claimed in claim 9 characterised in that more than one inner blanket (40′) is connected together in this withers region of the blanket by engagement of respective hooped and hooked nylon regions (74,76), always leaving on one side of the laminate blanket so formed a region of hooped nylon for engagement with the hooked nylon in the opening of the cover and on the other side a region of hooked nylon.

## Patentansprüche

1. Decke (10, 10′) für eine Vierfüßer (50), wobei die Decke in Form und Größe angepaßt ist, um dem Tier, welches die Decke tragen soll, zu passen, und wobei die Decke eine Unterlage (20, 20′) und eine Oberlage (18, 18′) aufweist, die an ihren Kanten miteinander verbunden sind und eine darin aus Wärmegründen angeordnete Innenlage, wobei ferner die Unterlage und die Oberlage einen Bezug (18, 20, 18′, 20′) bilden, dadurch gekennzeichnet, daß der Bezug durch einen relativ leichten Beutel mit einer Öffnung (22, 22′) gebildet ist, und daß die Innenlage durch mindestens eine getrennte, vergleichsweise schwere Decke (40, 40′) gebildet ist, welche in den Beutel durch die Öffnung einführbar und lösbar an dem Bezug mindestens im Bereich des Halses und der Schultern des Tieres verbindbar ist, um dadurch die Innendecke in dem Bezug örtlich festzulegen.

2. Decke nach Anspruch 1, dadurch gekennzeichnet, daß die Unterlage (20, 20′) aus einem leichten atmungsaktiven Material, wie beispielsweise Baumwolle, und die Oberlage (18, 18′) aus einem im wesentlichen regenfesten Material, wie beispielsweise Nylon, besteht.

3. Decke nach Anspruch 1 oder 2, dadurch gekennzeichnet, daß der Bezug allgemein U-förmig mit einer sehr breiten Basis (12) des U ausgebildet ist, und daß die Schenkel (14, 16) des U derart ausgebildet sind, daß sie sich um den Hals und die Schultern des Tieres erstrecken und an dessen Brust miteinander verbindbar sind.

4. Decke nach Anspruch 3, dadurch gekennzeichnet, daß die Öffnung (22) in dem Bezug längs der Verbindungsfuge zwischen der Unterlage und der Oberlage entlang einer Linie um die Außenseite der Basis des U im Bereich des Rumpfes des Pferdes angeordnet ist, wenn die Decke durch ein Pferd (50) getragen wird.

5. Decke nach Anspruch 4, dadurch gekennzeichnet, daß der Bezug Öffnungen (52, 54) an den Enden der Schenkel (14, 16) des U aufweist, durch welche Laschen (48) hindurchführbar und an dem Bezug (18, 20) festlegbar sind, die an den Enden der Schenkel (44, 46) der entsprechend geformten Innendecke (40) vorgesehen sind, um dadurch die Innendecke (40) in dem Bezug festzulegen.

6. Decke nach Anspruch 4 oder 5, dadurch gekennzeichnet, daß die Innendecke entsprechende Bereiche (42) aus schlaufenförmigem und hakenförmigem Nylon (Klettverschlüsse) aufweist, derart, daß zwei oder mehr Innendecken aneinander befestigbar sind, um einen dickeren und wärmeren Deckenschichtstoff zum Einfügen in den Bezug zu bilden.

7. Decke nach Anspruch 3, dadurch gekennzeichnet, daß die Öffnung (22′) in dem Bezug (18′, 20′) längs der Verbindungsfuge zwischen der Unterlage (20′) und der Oberlage (18′) auf einer Linie längs der Innenseite der Basis des U in dem Bereich des Widerristes eines Pferdes angeordnet ist, wenn die Decke durch ein Pferd (50) getragen wird.

8. Decke nach Anspruch 7, dadurch gekennzeichnet, daß die Öffnung durch einander gegenüberliegende Streifen (70, 72) aus schlaufenförmigem und hakenförmigem Nylon (Klettverschluß) die auf einander gegenüberliegenden Seiten der Öffnung angeordnet sind, verschließbar ist.

9. Decke nach Anspruch 8, dadurch gekennzeichnet, daß die entsprechend geformte Innendecke (40′) ebenfalls mit Streifen (74, 76) aus schlaufenförmigem und hakenförmigem Nylon im gleichen Bereich wie der Bezug versehen ist, wobei ein derartiger Streifen auf jeder Seite der Innendecke vorgesehen ist, derart, daß, wenn die Innendecke (40′) in dem Bezug (18′, 20′) eingesetzt ist, der schlaufenförmige Nylonstreifen (z.B. 74) auf der Innendecke in Eingriff mit dem hakenförmigen Nylonstreifen (z.B. 70) auf einer Seite der Öffnung (22′) in dem Bezug in Eingriff gelangen kann, während der hakenförmige Nylonstreifen (z.B. 76) an der Innendecke in Eingriff mit dem schlaufenförmigen Nylonstreifen (z.B. 72) auf der anderen Seite der Öffnung (22′) in dem Bezug in Eingriff gelangt.

10. Decke nach Anspruch 9, dadurch gekennzeichnet, daß mehr als eine Innendecke (40′) durch Eingriff entsprechender schlaufenförmiger und hakenförmiger Nylonbereiche (74, 76) im Bereich des Widerristes miteinander verbunden sind, wobei ständig eine Seite des so aus Decken geformten Schichtkörpers einen Bereich schlaufenförmigen Nylons für den Eingriff mit dem hakenförmigen Nylon in der Öffnung des Bezuges und die andere Seite einen hakenförmigen Nylonbereich aufweist.

## Revendications

1. Couverture (10,10′) pour animal quadrupède (50), cette couverture étant conformée et dimensionnée de façon à s'ajuster sur l'animal destiné à la porter, et comprenant une feuille inférieure (20,20′) et une feuille supérieure 18,18′) reliées ensemble par leurs bords, et un garnissage interne entre ces feuilles pour la chaleur, les feuilles inférieure et supérieure formant ensemble une housse (18,20,18′,20′), caratérisée en ce que ladite housse constitue une poche relativement légère ayant une ouverture (22,22′), et le garnissage interne comprenant au moins une couverture séparée relativement lourde (40,40′) qui peut être insérée dans la poche à travers l'ouverture et est apte à être fixée de façon libérable à la housse, au moins dans la région de l'encolure et des épaules de l'animal afin de positionner la couverture interne dans la housse.

2. Couverture suivant la revendication 1, caractérisée en ce que la feuille inférieure (20,20′) est faite d'une matière aérée légère telle que du coton, la feuille supérieure (18,18′) étant faite d'une matière à peu près imperméable telle que du Nylon.

3. Couverture suivant la revendication 1 ou 2, caractérisée en ce que la housse présente dans son ensemble la forme d'un U avec une très large base (12) et les branches (14,16) de l'U étant prévues de façon à s'étendre autour de l'encolure et des épaules de l'animal, et d'être réunies sur son poitrail.

4. Couverture suivant la revendication 3, caractérisée en ce que l'ouverture (22) dans la housse est située le long de la jonction entre les feuilles inférieure et supérieure, sur une ligne entourant l'extérieur de la base de l'U dans la région de la croupe du cheval lorsque la couverture est portée par un cheval (50).

5. Couverture suivant la revendication 4, caractérisée en ce qu'elle comporte des passages (52,54) aux extrémités des branches (14,16)de l'U, à travers lesquels des pattes (48) prévues sur les extrémités des branches (44,46) de la couverture interne (40), de forme correspondante, peuvent être passées et fixées sur la housse (18,20) afin de positionner la couverture interne (40) dans la housse.

6. Couverture suivant les revendications 4 ou 5, caractérisée en ce que la couverture interne comporte des pièces correspondantes (42) de Nylon à boucles et crochets de manière que deux ou plus de deux couvertures internes puissent être fixées ensemble pour former une couverture feuilletée plus épaisse et plus chaude destinée à être insérée dans la housse.

7. Couverture suivant la revendication 3, caractérisée en ce que l'ouverture (22′) de la housse (18′,20′) est ménagée le long de la jonction entre la feuille inférieure (20′) et la feuille supérieure (18′) suivant une ligne autour de l'intérieur de la base de l'U, dans la région du garrot du cheval lorsque la couverture est portée par un cheval (50).

8. Couverture suivant la revendication 7, caractérisée en ce que ladite ouverture peut être fermée par des bandes mutuellement opposées (70,72) de Nylon à boucles et crochets, fixées sur des faces opposées de l'ouverture.

9. Couverture suivant la revendication 8, caractérisée en ce que la couverture interne (40′) de forme correspondante est également pourvue de bandes (74,76) de Nylon à boucles et crochets dans la même région que la housse, une sur chaque face de la couverture interne, de sorte que lorsque la couverture interne (40′) est insérée dans la housse (18′, 20′), le Nylon à boucles (par exemple 74) sur la couverture interne puisse être engagé en prise avec le Nylon à crochets (par exemple 70) sur un côté de l'ouverture (22′) de la housse, et le Nylon à crochets (par exemple 76) sur la couverture puisse être engagé en prise avec le Nylon à boucles (par exemple 72) sur l'autre côté de l'ouverture (22′) de la housse.

10. Couverture suivant la revendication 9, caractérisée en ce que plus d'une couverture interne (40′) est reliée dans la région du garrot de la couverture, par engagement en prise de pièces de Nylon à boucles et crochets respectivment (74,76), une pièce de Nylon à boucles restant toujours sur une face de la couverture feuilletée ainsi formée pour coopérer avec le Nylon à crochets dans l'ouverture de la housse et sur l'autre face d'une pièce de Nylon à crochets.
